# EUROPÄISCHE PATENTANMELDUNG

(11) **EP 2 020 554 A2**
(43) Veröffentlichungstag der Anmeldung: **04.02.2009**
(21) Anmeldenummer: 08013050.3
(22) Anmeldetag: 19.07.2008
(51) Int. Cl.: F16L 23/14, F16L 23/00

(54) **Vorrichtung zum Verspannen von Profilen an Lüftungskanälen**

(30) Priorität: 03.08.2007 DE 202007010850 U
(71) Anmelder: Gebhardt-Stahl GmbH, 59457 Werl (DE)
(72) Erfinder: Gebhardt, Manfred, 59494 Soest (DE)
(74) Vertreter: Meinke, Dabringhaus und Partner GbR

(57) **Zusammenfassung**

Eine Vorrichtung (5) zum Verspannen von den Stirnseitenrahmen bildenden Profilen (2) an Lüftungskanälen (1a,1b) als in Längsrichtung im Wesentlichen U-förmig ausgebildeter Bügel, wobei ein U-Schenkel (8) mit einer Spannschraube (10), einem Gewindebolzen od. dgl. ausgerüstet ist, soll in der Gestaltung aus möglichst leichtem Material gebildet werden und gleichzeitig eine hohe Klemmkraft aufbringen.

Dies wird dadurch erreicht, dass der der Spannschraube (10) gegenüberliegende U-Schenkel (11) mit wenigstens einem in Richtung auf den gegenüberliegenden U-Schenkel (8) weisenden Eingriffsdorn (12) versehen ist, der in der Verspannlage die Außenwand des einen Rahmenprofiles beaufschlagt.

## Beschreibung

Die Erfindung richtet sich auf eine Vorrichtung zum Verspannen von den Stirnseitenrahmen bildenden Profilen an Lüftungskanälen der im Oberbegriff des Anspruches 1 angegebenen Gattung.

Es ist bekannt, aus gefalzten Blechtafeln Lüftungskanäle herzustellen, die an ihren jeweiligen Stirnseiten mit aus Metallprofilen gebildeten Verspannrahmen ausgebildet sind, um die einzelnen Kanalschüsse bzw. -stücke hintereinander anordnen und miteinander verspannen zu können. Da die Spannkraft in der Regel über die vier Eckwinkel derartiger stirnseitiger Rahmen aufgebracht wird, kann es geschehen, insbesondere bei vergleichsweise großen Kanaldurchmessern, dass die die Rahmen bildenden Metallprofile je nach Art der Druckbeaufschlagung z.B. in der Kanalmitte oder an anderen Stellen auseinandergepresst werden können, derart, dass es zu Leckagen kommen kann. Es ist daher bekannt, die rahmenbildenden Profile in ihrem oberen Bereich mit Fixierwülsten auszurüsten, die dann von Klemmschienen insgesamt über die Kanalbreite übergriffen werden, wie dies beispielsweise in der DE-12 12 356-C oder der DE-22 21 312-A dargestellt ist, um nur zwei vergleichsweise alte Lösungen zu nennen.

Eine andere Möglichkeit besteht darin, vergleichsweise große Klemmbügel über die Profile zu stülpen und diese an den Profilschienen selbst zu fixieren. Eine solche Möglichkeit zeigt die DE-28 02 037-C, eine Verspann-/Keilverbindung zeigt beispielsweise die DE-32 34 387-C.

Klemmbügel mit einer Fixierschraube werden ebenfalls in der Praxis eingesetzt und sind aus dem Sortiment der Anmelderin oder z.B. aus der EP 1 767 791 A, EP 0 151 075 A oder der US 3 276 800 bekannt.

Die Aufgabe der vorliegenden Erfindung besteht darin, derartige, mit Quetsch- oder Druckschrauben versehene Klemmen in der Gestaltung aus möglichst leichtem Material zu bilden und gleichzeitig eine hohe Klemmkraft aufzubringen.

Mit einer Vorrichtung der eingangs bezeichneten Art, die als in Längsrichtung der Luftkanäle gesehen im Wesentlichen U-förmig ausgebildeter Bügel gestaltet ist, wobei ein U-Schenkel mit einer Spannschraube, einem Gewindebolzen od. dgl. ausgerüstet ist, wird diese Aufgabe dadurch gelöst, dass der der Spannschraube gegenüberliegende U-Schenkel mit wenigstens einem in Richtung auf diesen gegenüberliegenden U-Schenkel weisenden Eingriffsdorn versehen ist, der in der Verspannlage die Außenwand des einen Rahmenprofiles beaufschlagt.

Dadurch, dass am Spannbügel wenigstens ein Eingriffsdorn vorgesehen ist, der der Spannschraube wirkmäßig gegenüberliegt, ist es möglich, relativ hohe Kräfte aufzubringen, wobei gleichzeitig durch den Eingriffsdorn sichergestellt ist, dass sich die Spannschraube räumlich nicht verschieben lässt, sondern dort verbleibt, wo ihre Position gewünscht ist.

Weitere Ausgestaltungen der Erfindung ergeben sich aus den Unteransprüchen. Dabei kann vorgesehen sein, dass an dem einen U-Schenkel durch Rückkröpfung ins Innere des U-Profiles ein Eingriffssteg ausgebildet ist, der mit dem wenigstens einen Dorn versehen ist.

Vorteilhaft ist auch vorgesehen, dass die Vorrichtung als Blechstanzelement ausgebildet ist mit zwei außenrandseitigen Eingriffsspitzen am Eingriffssteg, wobei in weiterer Ausgestaltung auch vorgesehen sein kann, dass in den U-Steg zur Verstärkung eine V-förmige Sicke eingeprägt ist.

An dieser Stelle sei bemerkt, dass diese V-förmige Sicke auch in anderer Weise gestaltet sein kann, etwa als Doppelpfeil od. dgl., wesentlich ist, dass durch diese Sickenausprägung die Flächenstärke der Vorrichtung vergleichsweise gering gewählt werden kann, was zu einer Kostenersparnis führt.

Der Gewichts- und Materialeinsparung dient auch eine weitere Ausgestaltung der Erfindung, die darin besteht, dass der die Schraube bzw. den Gewindebolzen aufnehmende U-Schenkel eine etwa trapezförmige Außenkontur aufweist mit der Gewindebohrung in der Flächenmitte.

Um eine optimale Krafteinleitung beim Verspannen zu gewährleisten, sieht die Erfindung auch vor, dass die durch Rückkröpfung gebildeten Eingriffsspitzen an dem einen U-Schenkel in einer parallel zum U-Steg ausgerichteten Ebene positioniert sind, die etwa durch die Mitte der Gewindebohrung im anderen U-Steg liegt.

Weitere Einzelheiten, Merkmale und Vorteile der Erfindung ergeben sich aufgrund der nachfolgenden Beschreibung sowie anhand der Zeichnung. Diese zeigt in
- Fig. 1: den Ausschnitt aus einem Lüftungskanal in der Trennfugenebene in räumlicher Darstellung,
- Fig. 2 und 3: räumliche Darstellungen der Verspannvorrichtung sowie in den
- Fig. 4 bis 6: Ansichten der Spannvorrichtung ohne Spannschraube.

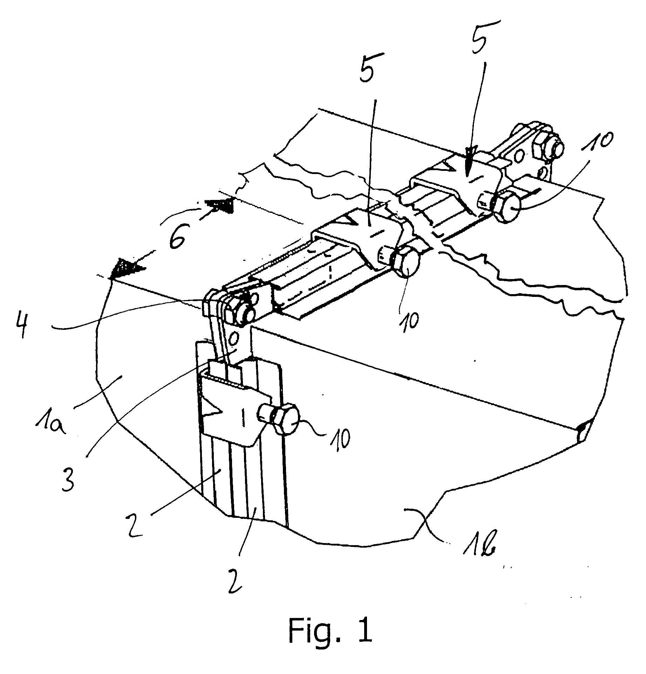

Zwei Luftkanalschüsse aus geformten Blechen, in Fig. 1 mit 1a und 1b bezeichnet, sind an ihren Stoßrändern mit aufgesteckten und befestigten Metallprofilen 2 versehen, die im Wesentlichen einen etwa L-förmigen Querschnitt aufweisen.

Ggf. unter Zwischenlage von Dichtungsmaterial werden die so gebildeten stirnseitigen Rahmen, ausgerüstet mit Eckwinkel 3, über Spannschrauben 4 in den Ecken gegeneinander verspannt.

Bei größeren Baulängen besteht die Gefahr, dass sich die nicht verspannten Bereiche der stirnseitigen Profile 2 auseinander bewegen, so dass erfindungsgemäß eine allgemein mit 5 bezeichnete Spannvorrichtung eingesetzt wird, deren Gestaltung weiter unten näher beschrieben ist.

Es hat sich in der Praxis gezeigt, dass die Positionierung dieser Spannvorrichtung so getroffen werden kann, dass sie ausgehend vom Rand an der Position eines Fünftels der Kanalbreite positionierbar ist, um ein optimales Zusammenspannen zu bewirken. Diese Position ist mit einem Doppelpfeil 6 in Fig. 1 angedeutet.

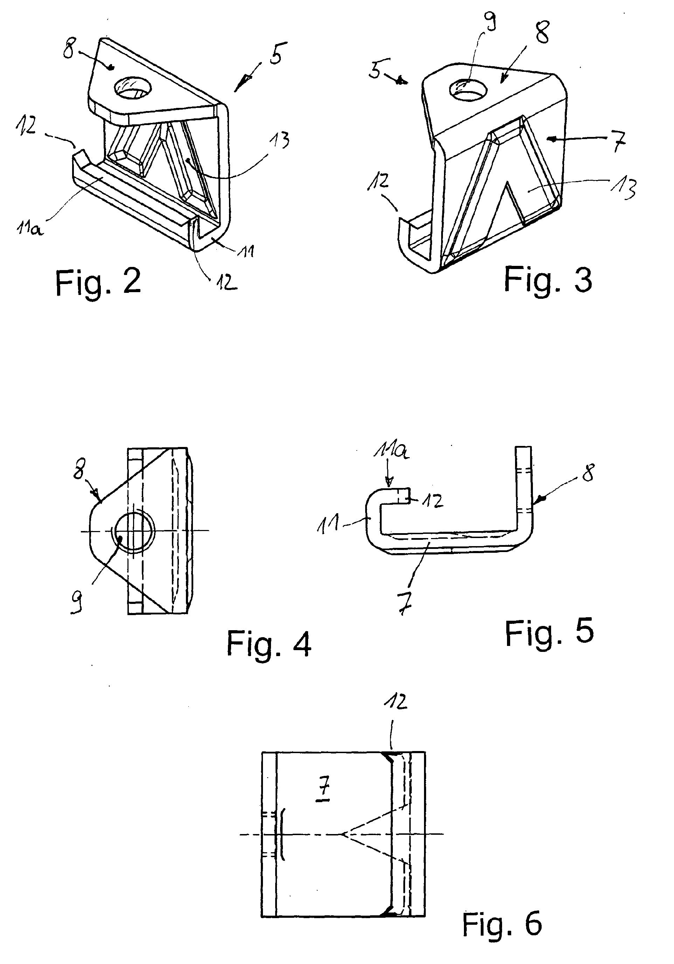

Wie sich insbesondere aus den Fig. 2 und 3 ergibt, wird die erfindungsgemäße Vorrichtung 1 von einem querschnittlich etwa U-förmigen Bügel gebildet mit einem U-Steg 7, einem U-Schenkel 8 mit einer Gewindebohrung 9 für eine Spannschraube 10 sowie mit einem gegenüberliegenden U-Schenkel 11, der an seinem außenrandseitigen Bereich eine nach innen weisende Rückkröpfung 11a aufweist.

Diese Rückkröpfung 11a am Schenkel 11 ist an ihren äußeren Randkanten mit nach innen weisenden Dornen 12 ausgerüstet, die sich im Material der die Rahmenschenkel bildenden Profile 2 einpressen können, wenn die Spannschrauben 10 bzw. ein entsprechender Spannbolzen angezogen wird.

Zur Verstärkung ist der U-Steg 7 mit Ein- bzw. Ausprägungen, beispielsweise in V-Form, ausgerüstet, die in den Figuren nur angedeutet sind und das Bezugszeichen 13 tragen.

Natürlich ist das beschriebene Ausführungsbeispiel der Erfindung noch in vielfacher Hinsicht abzuändern, ohne den Grundgedanken zu verlassen. So ist die Erfindung insbesondere nicht auf Anzahl der Dorne 12 am Eingriffssteg 11 beschränkt.

## Patentansprüche

1. Vorrichtung (5) zum Verspannen von den Stirnseitenrahmen bildenden Profilen (2) an Lüftungskanälen (1a,1b) als in Längsrichtung im Wesentlichen U-förmig ausgebildeter Bügel, wobei ein U-Schenkel (8) mit einer Spannschraube (10), einem Gewindebolzen od. dgl. ausgerüstet ist,
**dadurch gekennzeichnet,**
**dass** der der Spannschraube (10) gegenüberliegende U-Schenkel (11) mit wenigstens einem in Richtung auf den gegenüberliegenden U-Schenkel (8) weisenden Eingriffsdorn (12) versehen ist, der in der Verspannlage die Außenwand des einen Rahmenprofiles beaufschlagt.

2. Vorrichtung nach Anspruch 1,
**dadurch gekennzeichnet,**
**dass** an dem einen U-Schenkel (11) durch Rückkröpfung ins Innere des U-Profiles ein Eingriffssteg (11a) ausgebildet ist, der mit dem wenigstens einen Dorn (12) versehen ist.

3. Vorrichtung nach Anspruch 1 oder 2,
**dadurch gekennzeichnet,**
**dass** die Vorrichtung (5) als Blechstanzelement ausgebildet ist mit zwei außenrandseitigen Eingriffsdornen (12) am Eingriffssteg.

4. Vorrichtung nach einem der vorangehenden Ansprüche,
**dadurch gekennzeichnet,**
**dass** in den U-Steg (7) zur Verstärkung eine V-förmige Sicke (13) eingeprägt ist.

5. Vorrichtung nach einem der vorangehenden Ansprüche,
**dadurch gekennzeichnet,**
**dass** der die Spannschraube (10) bzw. den Gewindebolzen aufnehmende U-Schenkel (8) eine etwa trapezförmige Außenkontur aufweist mit der Gewindebohrung (9) in der Flächenmitte.

6. Vorrichtung nach einem der vorangehenden Ansprüche,
**dadurch gekennzeichnet,**
**dass** die durch Rückkröpfung gebildeten Eingriffsdorne (12) an dem einen U-Schenkel (11) in einer parallel zum U-Steg (7) ausgerichteten Ebene positioniert sind, die etwa durch die Mitte der Gewindebohrung (9) im anderen U-Schenkel (8) liegt.
